# EUROPÄISCHE PATENTSCHRIFT

(11) **EP 2 185 652 B1**
(45) Veröffentlichungstag und Bekanntmachung des Hinweises auf die Patenterteilung: **01.12.2010**
(21) Anmeldenummer: 08786631.5
(22) Anmeldetag: 30.07.2008
(51) Int. Cl.: C09B 67/00, C09D 5/38

(54) **VERFAHREN ZUR FORMIERUNG VON ORGANISCHEN PIGMENTEN**
METHOD FOR FORMING ORGANIC PIGMENTS
PROCEDE DE FORMATION DE PIGMENTS ORGANIQUES

(30) Priorität: 03.08.2007 EP 07113816
(43) Veröffentlichungstag der Anmeldung: 19.05.2010
(73) Patentinhaber: BASF SE, 67056 Ludwigshafen (DE)
(72) Erfinder: JESSE, Joachim, 67256 Weisenheim (DE); KLUEGLEIN, Matthias, 67071 Ludwigshafen (DE); VAN GELDER, Richard, 67346 Speyer (DE); BEST, Wolfgang, 67251 Freinsheim (DE)
(86) Internationale Anmeldenummer: PCT/EP2008/059997
(87) Internationale Veröffentlichungsnummer: WO 2009/019180

(56) Entgegenhaltungen:
- EP-A- 0 775 703
- WO-A-2004/048482
- GB-A- 2 043 094
- US-A- 3 051 720
- US-A- 3 249 453
- US-A- 4 088 506
- US-A- 4 415 333
- US-A- 4 455 173

## Beschreibung

Die Erfindung betrifft ein Verfahren zur Formierung von organischen Pigmenten unter Verwendung von Sulfonatgruppen aufweisenden Kondensationsprodukten. Unter "Sulfonatgruppe" wird nachstehend sowohl die (saure) Sulfonsäuregruppe -SO₃H als auch ihr Salz -SO₃M (M = Metall, Ammonium) verstanden.

Organische Pigmente fallen bei der Synthese häufig in grob kristalliner Form mit sehr heterogener Teilchengrößenverteilung an. Zur Überführung in eine für die Anwendung geeignete, coloristisch wertvolle Pigmentform werden die Rohpigmente daher üblicherweise einer Formierung unterzogen.

Für diese Zwecke ist eine Mahlung des Rohpigments und anschließende Rekristallisation des Mahlguts in einem organischen Lösungsmittel bekannt, oder die Mahlung wird als Nassmahlung in wässriger Suspension in schnell laufenden Rührwerkskugelmühlen durchgeführt. Mit den beschriebenen Methoden wird zwar, zum Teil unter hohem Zeitaufwand, eine Teilchenzerkleinerung und damit eine Verbesserung der coloristischen Eigenschaften der Pigmente erreicht, jedoch lässt sich die Teilchengröße der erhaltenen Pigmente nur schwer steuern, und die Pigmente weisen häufig eine für eine Reihe von Anwendungen, zum Beispiel als Farbmittel für Lackanwendungen, unzureichende, da zu breite Teilchengrößenverteilung auf.

Aus der WO 02/00643 ist ein Verfahren zur Formierung von Chinophthalon-Rohpigmenten bekannt, bei dem man das bei der Synthese anfallende Rohpigment einer Mahlung in Abwesenheit von Mahlhilfsmitteln unterzieht und das erhaltene Mahlgut anschließend in Gegenwart eines Chinophthalonderivats in einem organischen Lösungsmittel oder einem Gemisch aus organischem Lösungsmittel und Wasser kristallisieren lässt. Als Derivate werden beispielsweise Sulfonsäurederivate der Chinophthalonpigmente genannt.

Aus WO 2004/048482 ist ein Verfahren zur Formierung von organischen Pigmenten bekannt, bei dem man das Pigment in konzentrierter Schwefelsäure löst und die Schwefelsäurelösung in Gegenwart eines Kondensationsproduktes aus Naphthalinsulfonsäure und Formaldehyd als Kristallisationsmodifikator mit Wasser mischt. Der Kristallisationsmodifikator wird dabei vor dem Vermischen der schwefelsauren Pigmentlösung zugegeben oder er wird in dieser durch Umsetzung von 1- und 2-Naphthalinsulfonsäure mit Formaldehyd in situ erzeugt. Nachteilig an dieser in-situ-Synthese ist, dass Kondensationsprodukte mit breiter und schlecht definierter Molekulargewichtsverteilung resultieren.

Auch in den Dokumenten EP,A,775,703 sowie US,A,3,051,720 werden Pigmente trocken vorgemahlen und anschließend einer Säurequellung unterzogen.

Die durch Fällen aus Schwefelsäure in Gegenwart von Kristallisationsmodifikatoren erhaltenen Pigmente genügen im Hinblick auf ihre koloristischen Eigenschaften, ihrer Dispergierbarkeit und der Viskosität der erhaltenen Lacke nicht immer den erforderlichen Ansprüchen. Aufgabe der Erfindung ist es, ein vorteilhaftes und einfach durchzuführendes Verfahren zur Formierung von organischen Pigmenten bereitzustellen, welches leicht dispergierbare Pigmente mit sehr guten koloristischen Eigenschaften, insbesondere einer hohen Lasur, und rheologischen Eigenschaften ergibt.

Gelöst wird die Aufgabe durch ein Verfahren zur Formierung eines organischen Pigments, bei dem man das Pigment in Gegenwart eines Sulfonatgruppen aufweisenden Kondensationsproduktes aus mindestens einer Arylsulfonsäure und mindestens einem aliphatischen Aldehyd mit 1 bis 6 C-Atomen als Kristallisationsmodifikator trocken zerkleinert, das erhaltene Gemisch aus Pigment und Kristallisationsmodifikator in Mineralsäure dispergiert und das Pigment in Gegenwart des Kristallisationsmodifikators in Mineralsäure quellen lässt.

Der Kristallisationsmodifikator ist in einer Ausführungsform der Erfindung ein Kondensationsprodukt aus einer oder mehreren Naphthalinsulfonsäuren, die eine oder mehr Sulfonsäuregruppen aufweisen können, vorzugsweise aus 1-Naphthalinsulfonsäure, 2-Naphthalinsulfonsäure oder deren Gemischen, und einem oder mehreren verschiedenen aliphatischen Aldehyden mit 1 bis 6 C-Atomen. Bevorzugt sind Gemische aus 1-Naphthalinsulfonsäure und 2-Naphthalinsulfonsäure, beispielsweise im Molverhältnis 4 : 1. Im Allgemeinen wird pro mol vorhandener Naphthalinsulfonsäure mit 0,5 bis 2 mol aliphatischem Aldehyd kondensiert, besonders bevorzugt beträgt dieses Molverhältnis ca. 1 : 1.

Bevorzugter aliphatischer Aldehyd ist Formaldehyd. Besonders bevorzugt wird nur Formaldehyd eingesetzt.

Im Allgemeinen werden die Naphthalinsulfonsäuren durch Sulfonierung von Naphthalin mit konzentrierter Schwefelsäure oder Oleum hergestellt. Dabei können in geringem Umfang auch mehrfach sulfonierte Produkte und/oder Sulfone gebildet werden und folglich auch in den Kondensationsprodukten enthalten sein.

Beispielsweise kann ein geeignetes Naphthalinsulfonsäure-Formaldehyd-Kondensat wie folgt hergestellt werden: 1 bis 3 Gewichtsteile Naphthalin werden mit 1 bis 3 Gewichtsteilen einer Schwefelsäure mit einer Konzentration von 85 bis 100 Gew.-% oder Oleum mit einem Gehalt an freiem SO₃ von 2 bis 45 Gew.-% sulfoniert. Die Sulfonierung kann bei Temperaturen von 80 bis 190°C durchgeführt werden, die Reaktionszeiten betragen von 0,5 bis 10 Stunden. Bei der Sulfonierung können Hilfsmittel wie Borsäure anwesend sein, bevorzugt in einer Konzentration von 0,5 bis 5 Gew.-%, bezogen auf Schwefelsäure bzw. Oleum. Nach der Sulfonierung wird das Reaktionsgemisch mit 0,5 bis 2 Teilen Wasser verdünnt und anschließend mit 0,3 bis 1,8 Teilen wässriger Formaldehyd-Lösung mit einer Konzentration von 20 bis 40 Gew.-% Formaldehyd bei einer Temperatur von 80 bis 180°C kondensiert. Das Kondensationsgemisch wird anschließend mit bis zu 0,5 Teilen Wasser verdünnt und mit Natronlauge auf einen pH-Wert von 4 bis 10 eingestellt. Das Kondensationsgemisch wird schließlich nochmals mit 0,5 Teilen Wasser verdünnt, mit Natronlauge und Kalkmilch versetzt und von ausfallendem CaSO₄ abfiltriert. Anschließend wird der pH-Wert auf einen Wert zwischen 4 und 10 eingestellt. Zum Schluss wird mit Wasser die Endkonzentration von 15 bis 50 Gew.-% Trockengehalt eingestellt.

In einer weiteren Ausführungsform der Erfindung ist der Kristallisationsmodifikator ein Kondensationsprodukt aus einer oder mehreren verschiedenen Hydroxyarylsulfonsäuren und einem oder mehreren verschiedenen aliphatischen Aldehyden mit 1 bis 6 C-Atomen. Im Allgemeinen wird pro mol vorhandener Hydroxyaryleinheiten mit 0,25 bis 4 mol aliphatischem Aldehyd kondensiert. Wird Harnstoff mitverwendet, so wird dieser im Allgemeinen in Mengen von 0,25 bis 4 mol Harnstoff pro mol vorhandener Hydroxyaryleinheiten eingesetzt. Neben Hydroxyarylsulfonsäure können ein oder mehrere verschiedene Hydroxydiarylsulfonverbindungen in dem Kondensationsprodukt einkondensiert vorliegen. Die Herstellung des Kondensationsproduktes kann weiterhin in Gegenwart von einem Alkalisulfit, vorzugsweise Natriumsulfit, durchgeführt werden, wobei weitere Sulfonatgruppen - zusätzlich zu den durch die Hydroxyarylsulfonsäure eingeführten Sulfonatgruppen - in das Kondensationsprodukt eingeführt werden.

Der Kristallisationsmodifikator kann ein Kondensationsprodukt aus einer oder mehreren verschiedenen Hydroxydiarylsulfonverbindungen, einem oder mehreren verschiedenen aliphatischen Aldehyden mit 1 bis 6 C-Atomen und einem Alkalisulfit, vorzugsweise Natriumsulfit, sein. Die Sulfonatgruppen werden hierbei als Alkylsulfonatgruppen in das Kondensationsprodukt eingeführt. Im Allgemeinen wird die Hydroxydiarylsulfonverbindung mit 0,5 bis 5 mol des aliphatischen Aldehyds und 0,4 bis 2 mol des Alkalisulfits pro mol Hydroxydiarylsulfonverbindung umgesetzt.

Geeignete Hydroxyarylsulfonsäuren, welche zur Herstellung der erfindungsgemäß eingesetzten Kristallisationsmodifikatoren verwendet werden können, sind beispielsweise Hydroxyphenylsulfonsäuren oder Hydroxynaphthylsulfonsäuren. Diese können auch mehrere Hydroxygruppen aufweisen. Bevorzugte Hydroxyarylsulfonsäure ist Phenolsulfonsäure.

Geeignete Hydroxydiarylsulfonverbindungen, welche zur Herstellung der erfindungsgemäß eingesetzten Kondensationsprodukte verwendet werden können, sind beispielsweise Dihydroxydiphenylsulfone oder - allgemeiner - Polyhydroxydiphenylsulfone sowie Dihydroxydinaphthylsulfone oder - allgemeiner - Polyhydroxydinaphthylsulfone. Bevorzugte Hydroxydiarylsulfonverbindung ist Dihydroxydiphenylsulfon (DHDPS).

Im Allgemeinen werden Hydroxyarylsulfonsäuren und Hydroxydiarylsulfone durch Sulfonierung der entsprechenden Hydroxyarylverbindungen, beispielsweise von Naphtholen, Phenol oder Polyphenolen, mit konzentrierter Schwefelsäure oder Oleum hergestellt. Dabei entstehen im Allgemeinen Gemische aus Hydroxyarylsulfonsäuren und Hydroxydiarylsulfonen.

Beispielsweise kann ein Kristallisationsmodifikator verwendet werden, der erhältlich ist, indem man Phenol mit konzentrierter Schwefelsäure, mit Oleum eines SO₃-Gehalts von 20 bis 65 Gew.-% oder mit einem Gemisch aus Schwefelsäure und Oleum, wobei das Molverhältnis Schwefelgesamtsäure, gerechnet als SO₃, zu Phenol von 0,7 : 1 bis 1,5 : 1 beträgt, bei einer Temperatur von 100 bis 180°C zu einem Gemisch enthaltend Phenolsulfonsäure, Dihydroxydiphenylsulfon und Schwefelsäure reagieren lässt, oder durch Abmischen der einzelnen Komponenten ein entsprechendes Gemisch herstellt, und anschließend bei 40 bis 90°C pro mol vorhandener Phenoleinheiten mit 0,5 bis 4 mol eines aliphatischen Aldehyds mit 1 bis 6 C-Atomen, vorzugsweise Formaldehyd, und - optional - mit 0,25 bis 4 mol Harnstoff kondensiert.

In einer weiteren bevorzugten Ausführungsform wird ein Kristallisationsmodifikator eingesetzt, der erhältlich ist, indem man Dihydroxydiphenylsulfon mit 0,5 bis 5 mol eines aliphatischen Aldehyds mit 1 bis 6 C-Atomen, vorzugsweise Formaldehyd, und 0,4 bis 2 mol Natriumsulfit pro mol Dihydroxydiphenylsulfon bei einer Temperatur von 90 bis 180°C reagieren lässt.

Es können auch Gemische aus den vorstehend beschriebenen Kondensationsprodukten eingesetzt werden.

Aus den erhaltenen Lösungen kann das Sulfonatgruppen enthaltende Kondensationsprodukt isoliert werden, beispielsweise durch Ausfällen des Kondensationsproduktes durch Zusatz einer mit Wasser mischbaren Flüssigkeit, in der das Kondensationsprodukt nicht löslich ist, oder durch Verdampfen des flüssigen Reaktionsmediums, beispielsweise durch Sprühtrocknung. So wird das Kondensationsprodukt letztlich als Feststoff erhalten.

Die Kondensationsprodukte wirken im Allgemeinen als Kristallisationsinhibitoren.

Wesentlich ist, dass die Trockenvermahlung des Pigments in Gegenwart des Kristallisationsmodifikators durchgeführt wird. Die Zerkleinerung des Pigments in Gegenwart des Kristallisationsmodifikators erfolgt im Allgemeinen durch Trockenmahlung des Pigments in Gegenwart des Kristallisationsmodifikators. Vorzugsweise erfolgt die Trockenmahlung in einer kontinuierlich oder diskontinuierlich arbeitenden Kugelmühle oder in einer Schwingmühle.

Das durch die Trockenmahlung erhaltene Gemisch aus organischem Pigment und Kristallisationsmodifikator wird anschließend zur Quellung des Pigments in Mineralsäure dispergiert. Vorzugsweise wird als Mineralsäure verdünnte wässrige Schwefelsäure eingesetzt. Durch die Quellung in Gegenwart des Kristallisationsmodifikators kommt es zum Wachsen größerer Pigmentpartikel auf Kosten von kleineren Pigmentpartikeln und/oder zu einer Glättung/Ausheilung der Kristalloberflächen der Pigmentpartikel.

Die optimale Mineralsäurekonzentration für die Quellung des trocken vermahlten Pigments ist im Einzelfall anzupassen. Geeignete verdünnte Schwefelsäure weist aber im Allgemeinen eine Konzentration von 50 bis 85, bevorzugt 60 bis 85 Gew.-% auf. Das Quellen des Pigments in der Mineralsäure, vorzugsweise der verdünnten wässrigen Schwefelsäure, in Gegenwart des Kristallisationsmodifikators erfolgt im Allgemeinen bei Temperaturen von 15 bis 90°C über einen Zeitraum von im Allgemeinen 0,5 bis 24 Stunden. Die optimalen Quellbedingungen können für jede Pigmentart in Vorversuchen ermittelt werden. Anschließend kann noch mit Wasser verdünnt werden. Hierzu wird im Allgemeinen zu der schwefelsauren Pigmentdispersion das 2- bis 6-fache an Wasser zugegeben. Anschließend kann noch beispielsweise 0,5 bis 2 Stunden nachgerührt werden.

Der erfindungsgemäß eingesetzte Kristallisationsmodifikator liegt während der Quellung im Allgemeinen in Mengen von 0,1 bis 30 Gew.-%, bevorzugt 0,3 bis 25 Gew.-%, besonders bevorzugt 5 bis 22 Gew.-%, bezogen auf die Pigmentmenge, vor.

In einigen Fällen kann es von Vorteil sein, neben den Sulfonatgruppen enthaltenden Kondensationsprodukten aus Arylsulfonsäure und aliphatischem Aldehyd weitere Kristallisationsmodifikatoren, Dispergiermittel, Harze, Tenside oder spezielle Polymere einzusetzen. Beispiele für weitere Kristallisationsmodifikatoren sind sulfonsäuregruppenhaltige Pigmentderivate oder Sulfonamide, wie Imidazolmethyl- oder Pyrazolmethylchinacridon-Pigmentsulfonsäuren. Beispiele für geeignete Tenside sind anionische Tenside wie Alkylbenzolsulfonate oder Alkylnaphthalinsulfonate oder Alkylsulfosuccinate, kationische Tenside wie quaternäre Ammoniumsalze, beispielsweise Benzyltributylammoniumchlorid, oder nichtionische oder amphotere Tenside wie Polyoxyethylen-Tenside und Alkyl- oder Amidopropyl-Betaine. Geeignete spezielle Polymere sind beispielsweise Polyacrylsäure, Polymethacrylsäure, Polyurethane, Polyvinylalkohol, Polyvinylpyrrolidon oder Cellulosederivate. Beispiele für Harze sind natürliche Harze wie Kolophonium, oligomerisiertes, polymerisiertes, hydriertes, teilhydriertes oder disproportioniertes Kolophonium. Die zusätzlichen Kristallisationsmodifikatoren, Dispergiermittel, Harze, Tenside oder speziellen Polymere können vor oder während der Trockenvermahlung, während der Quellung oder bei der weiteren Aufarbeitung der Pigmente zugegeben werden. Die optimalen Bedingungen können für jedes Pigment in orientierenden Versuchen optimiert werden.

In einer weiteren Ausführungsform des erfindungsgemäßen Verfahrens wird ein Pigmentsynergist zugegeben. Der Pigmentsynergist ist im Allgemeinen ein Sulfonatgruppen oder Carbonatgruppen enthaltendes Derivat oder ein basisches Derivat eines organischen Pigments, bevorzugt ist er ein Derivat des zu formierenden Pigments. Der Pigmentsynergist kann beispielsweise vor oder während des Zerkleinerungsschrittes oder vor oder während der Quellung des Pigments zugegeben werden. Es kann sich auch ein Nachbehandlungsschritt anschließen, in dem das isolierte trockene, bereits formierte Pigment nochmals in Gegenwart des Pigmentsynergisten vermahlen wird.

In einer weiteren Ausführungsform der Erfindung kann während des Quellungsschrittes neben dem oder den Kristallisationsmodifikatoren ein die Löslichkeit des Pigments erhöhender Zusatzes vorliegen. Im Allgemeinen wird als die Löslichkeit erhöhender Zusatz ein organisches Lösungsmittel zugegeben. Geeignete organische Lösungsmittel sind zum Beispiel Xylole, Glykole, Alkohole, THF, Aceton, NMP, DMF und Nitrobenzol. Diese werden, bezogen auf die wässrige Pigment-Suspension, im Allgemeinen in Menge von 0,1 bis 50 Gew.-% zugegeben. Die Menge an Kristallisationsmodifikator beträgt dabei im Allgemeinen 0,1 bis 30 Gew.-%, bezogen auf die wässrige Pigment-suspension (ohne organisches Lösungsmittel). Im Allgemeinen wird die Suspension in Gegenwart des organischen Lösungsmittels bei Temperaturen im Bereich von 15°C bis Siedetemperatur gerührt und danach das organische Lösungsmittel abdestilliert.

In allen Fällen wird das in Gegenwart des Kristallisationsmodifikators kristallisierte Pigment anschließend durch Filtration der wässrigen Suspension als Feststoff isoliert.

Geeignete Pigmente, welche nach dem erfindungsgemäßen Verfahren formiert werden können, sind beispielsweise Phthalocyanine, Perylene, Chinacridone, Indanthrone, Chinophthalone, Dioxazine und Diketopyrrole, bevorzugt Indanthrone und Perylene. Von den Perylenen bevorzugt sind die Pigmente vom Typ C.I. Pigment Red 179. Diese können nach verschiedenen Verfahren hergestellt werden. So kann Perylen-3,4,9,10-tetracarbonsäurediimid mit einem Methylierungsagenz zu C.I. Pigment Red 179 methyliert werden oder Perylentetracarbonsäureanhydrid mit Methylamin zu C.I. Pigment Red 179 kondensiert werden. Letzteres wird bevorzugt verwendet. Es können aber auch Gemische, der nach diesen beiden Methoden hergestellten Pigmente eingesetzt werden. Es können auch nach diesen Methoden hergestellte Pigmentderivate oder deren Gemische eingesetzt werden.

Die durchschnittliche Teilchengröße der formierten Pigmente liegt im Allgemeinen im Bereich von 10 bis 400 nm, bevorzugt 20 bis 200 nm.

Die nach dem erfindungsgemäßen Verfahren formierten Pigmente können den Kristallisationsmodifikator an der Oberfläche der Pigmentteilchen enthalten. Die Pigmentzubereitungen können - neben den bereits genannten Pigmentsynergisten - weitere Additive enthalten, im Allgemeinen in Mengen von bis zu 20 Gew.-%. Weitere Additive sind beispielsweise Netzmittel, Tenside, Antischaummittel, Antioxidantien, UV-Absorber, Stabilisatoren, Weichmacher und Texturierungshilfsmittel.

Die Erfindung wird durch die nachstehenden Beispiele näher erläutert.

### Beispiele

Die Prüfung der erfindungsgemäßen Pigmentzubereitungen erfolgt in einem wässrigen Lacksystem.

Dazu wird zuerst eine Wasserabtönpaste auf Basis eines wasserverdünnbaren Polyurethanharzes hergestellt. Es werden 100 g der in Beispiel 1.3 der WO-A 92/15405 beschriebenen Polyurethanharzdispersion, 30 g der Pigmentzubereitung und 50 g Wasser suspendiert, mit Dimethylethanolamin auf einen pH von 8 eingestellt und in einer Kugelmühle (Beladen mit 1,0 - 1,6 mm SAZ-Perlen [SAZ = Silizium/Aluminium/Zirkoniumoxid]) 4 h gemahlen.

Im 2. Schritt werden 34 g dieser Wasserabtönpaste (15 gew.-%ig bezogen auf Pigment) zu 225 g eines Mischlacks auf Polyurethanbasis (beschrieben in Beispiel 3 der WO-A 92/15405) gegeben. Nach Zugabe von 7,5 g Wasser wird mit Aminoethanol ein pH-Wert von 8 eingestellt. Die erhaltene Suspension wird 15 min mit einem Propellerrührer bei 1000 U/min gerührt.

Auf Basis der hergestellten wässrigen Basislacke werden Metalliclacke hergestellt und durch Sprühen appliziert.

Als Kristallisationsmodifikator wurde Tamol^{®}) NN9401, ein Naphthalinsulfonsäure/Formaldehyd-Kondensationsprodukt mit einem Molekulargewicht im Bereich von 5000 bis 10 000 g/mol eingesetzt.

### Vergleichsbeispiel 1

100 g Perylen-3,4,9,10-tetracarbonsäure-N,N'-dimethyldiimid (C.I. Pigment Red 179, Formel-Nr. 71130) werden in einer mit 1,5 kg Stahlkugeln bestückten Doppelmantelkugelmühle 50 Stunden bei 50°C vermahlen.

30 g des gemahlenen Pigments werden 16 Stunden bei Raumtemperatur in 300 g 76 %iger Schwefelsäure gequollen. Der Ansatz wird anschließend mit 1,5 I Eiswasser verdünnt, 30 Minuten nachgerührt, filtriert, neutral gewaschen und zusammen mit 2,25 Teilen einer sulfonsäuregruppenhaltigen Perylenverbindung (hergestellt nach Beispiel 3 der EP 0 486 531 B1) gemahlen.

### Vergleichsbeispiel 2

90 g Perylen-3,4,9,10-tetracarbonsäure-N,N'-dimethyldiimid (C.I. Pigment Red 179, Formel-Nr. 71130) und 10 g Harz (Dertopol) werden in einer mit 1,5 kg Stahlkugeln bestückten Doppelmantelkugelmühle 50 Stunden bei 50°C vermahlen.

30 g des gemahlenen Pigments werden 16 Stunden bei Raumtemperatur in 300 g 76 %iger Schwefelsäure gequollen. Der Ansatz wird anschließend mit 1,5 I Eiswasser verdünnt, 30 Minuten nachgerührt, filtriert, neutral gewaschen und zusammen mit 2,25 Teilen einer sulfonsäuregruppenhaltigen Perylenverbindung (hergestellt nach Beispiel 3 der EP 0 486 531 B1) gemahlen.

### Beispiel 1

80 g Perylen-3,4,9,10-tetracarbonsäure-N,N'-dimethyldiimid (C.I. Pigment Red 179, Formel-Nr. 71130), 10 g Harz (Dertopol) und 10 g eines Naphthalinsulfonsäure-Formaldehyd-Kondensationsproduktes mit einem Molekulargewicht im Bereich von 5000 bis 10 000 g/mol (Tamol® NN9401, BASF) werden in einer mit 1,5 kg Stahlkugeln bestückten Doppelmantelkugelmühle 50 Stunden bei 50°C vermahlen.

30 g des gemahlenen Pigments werden 16 Stunden bei Raumtemperatur in 300 g 76 %iger Schwefelsäure gequollen. Der Ansatz wird anschließend mit 1,5 I Eiswasser verdünnt, 30 Minuten nachgerührt, filtriert, neutral gewaschen und zusammen mit 2,25 Teilen einer sulfonsäuregruppenhaltigen Perylenverbindung (hergestellt nach Beispiel 3 der EP 0 486 531 B1) gemahlen.

Die nach Beispiel 1 hergestellte Zubereitung weist eine sehr gute Dispergierbarkeit und hervorragende rheologische Eigenschaften in wasserverdünnbaren Lacksystemen auf. Aufgrund der gegenüber dem Pigment aus dem Vergleichsbeispiel 1 bzw. der Zubereitung aus dem Vergleichsbeispiel 2 deutlich höheren Transparenz eignet sich das Pigment aus Beispiel 1 besonders zur Pigmentierung von Metallic-Lacken.

### Vergleichsbeispiel 3

70 g Indanthron-Pigment C.I. P.B. 60 (Formel-Nr: 69 800) werden in einer mit 1,5 kg Stahlkugeln bestückten Doppelmantelkugelmühle 20 h bei 50°C vermahlen.

30 g des gemahlenen Pigments werden 5 h bei Raumtemperatur in 300 g 75%iger Schwefelsäure gequollen. Der Ansatz wird anschließend mit 480 ml Eiswasser verdünnt, 30 min nachgerührt, filtriert, neutral gewaschen und gemahlen.

### Beispiel 2

63 g Indanthron-Pigment C.I. P.B. 60 (Formel-Nr: 69 800) und 7 g eines Naphthalinsulfonsäure-Formaldehyd-Kondensationsproduktes mit einem Molekulargewicht im Bereich von 5000 - 10 000 g/mol (Tamol^{®} NN9401 der BASF AG, Ludwigshafen, DE) werden in einer mit 1,5 kg Stahlkugeln bestückten Doppelmantelkugelmühle 20 h bei 50°C vermahlen.

30 g des gemahlenen Gemisches werden 5 h bei Raumtemperatur in 300 g 75%iger Schwefelsäure gequollen. Der Ansatz wird anschließend mit 480 ml Eiswasser verdünnt, 30 min nachgerührt, filtriert, neutral gewaschen und gemahlen.

### Beispiel 3

56 g Indanthron-Pigment C.I. P.B. 60 (Formel-Nr: 69 800), 7 g eines Naphthalinsulfonsäure-Formaldehyd-Kondensationsproduktes mit einem Molekulargewicht im Bereich von 5000 - 10 000 g/mol (Tamol® NN9401 der BASF AG, Ludwigshafen, DE) und 7 g Harz (Dertopol^{®}, DRT) werden in einer mit 1,5 kg Stahlkugeln bestückten Doppelmantelkugelmühle 20 h bei 50°C vermahlen.

30 g des gemahlenen Gemisches werden 5 h bei Raumtemperatur in 300 g 75%iger Schwefelsäure gequollen. Der Ansatz wird anschließend mit 480 ml Eiswasser verdünnt, 30 min nachgerührt, filtriert, neutral gewaschen und gemahlen.

Die nach den Beispielen 2 und 3 hergestellten Zubereitungen weisen eine sehr gute Dispergierbarkeit und hervorragende rheologische Eigenschaften in wasserverdünnbaren Lacksystemen auf. Aufgrund der gegenüber dem Pigment aus dem Vergleichsbeispiel 3 deutlich höheren Transparenz eignen sich diese Pigmente besonders zur Pigmentierung von Metallic-Lacken.

Die Transparenz wird an Lackierungen (Rakelungen) auf Blech über schwarzem Untergrund bestimmt:

P.R. 179 (Vergleichsbeispiele 1 und 2, Beispiel 1) mit Nassfilmdicke 100 µm bei 15%iger Pigmentierung;

P.B. 60 (Vergleichsbeispiel 3 und Beispiele 2 und 3) mit Nassflimdicke 50 µm bei 17%iger Pigmentierung.

Der CIELAB-Farbabstand delta-E* zwischen der gemessenen Lackschicht über schwarzem Untergrund und einem Ideal-Schwarz gibt eine Maßzahl (Streu-Delta-E*) für die Transparenz. Die Bestimmung des Farbabstandes delta-E* im CIELAB-Farbenraum ist beschrieben in DIN 6174. Je kleiner diese Maßzahl bei gleicher Schichtdicke und Pigmentierung, desto höher ist die Transparenz.

Die Streu-Delta-E*-Werte der Lackierungen aus den Beispielen und Vergleichsbeispielen zeigt die nachstehende Tabelle 1:

**Tabelle 1**

| Lackierung | Streu-Delta-E* |
|---|---|
| Vergleichsbeispiel 1 | 42,20 |
| Vergleichsbeispiel 2 | 39,52 |
| Beispiel 1 | 25,56 |
| Vergleichsbeispiel 3 | 9,78 |
| Beispiel 2 | 8,83 |
| Beispiel 3 | 7,35 |

## Patentansprüche

1. Verfahren zur Formierung eines organischen Pigments, bei dem man das Pigment in Gegenwart eines Sulfonatgruppen aufweisenden Kondensationsproduktes aus einer Arylsulfonsäure und mindestens einem aliphatischen Aldehyd mit 1 bis 6 C-Atomen als Kristallisationsmodifikator trocken zerkleinert, das erhaltene Gemisch aus Pigment und Kristallisationsmodifikator in Mineralsäure dispergiert und das Pigment in Gegenwart des Kristallisationsmodifikators in Mineralsäure quellen lässt.

2. Verfahren nach Anspruche 1, **dadurch gekennzeichnet, dass** der Kristallisationsmodifikator ein Kondensationsprodukt aus Naphthalinsulfonsäure und Formaldehyd ist.

3. Verfahren nach Anspruch 1, **dadurch gekennzeichnet, dass** der Kristallisationsmodifikator ein Kondensationsprodukt aus mindestens einer Hydroxyarylsulfonsäure und/oder mindestens einer Hydroxydiarylsulfonverbindung und mindestens einem aliphatischen Aldehyd mit 1 - 6 C-Atomen, optional Harnstoff und gegebenenfalls einem Alkalisulfit, oder ein Gemisch aus derartigen Kondensationsprodukten ist.

4. Verfahren nach einem der Ansprüche 1 bis 3, **dadurch gekennzeichnet, dass** die Quellung des Pigments in Gegenwart weiterer Kristallisationsmodifikatoren, Dispergiermittel, Tenside oder spezieller Polymere durchgeführt wird.

5. Verfahren nach einem der Ansprüche 1 bis 4, **dadurch gekennzeichnet, dass** ein Pigmentsynergist zugegeben wird.

6. Verfahren nach Anspruch 5, **dadurch gekennzeichnet, dass** der Pigmentsynergist vor oder während des Zerkleinerungsschritts oder vor oder während der Quellung des Pigments zugegeben wird.

7. Verfahren nach Anspruch 5, **dadurch gekennzeichnet, dass** in einem Nachbehandlungsschritt das isolierte, trockene, formierte Pigment in Gegenwart des Pigmentsynergisten vermahlen wird.

8. Verfahren nach einem der Ansprüche 5 bis 7, **dadurch gekennzeichnet, dass** der Pigmentsynergist ein Sulfonatgruppen oder Carbonatgruppen enthaltendes Derivat oder ein basisches Derivat des zu formierenden organischen Pigments ist.

9. Verfahren nach einem der Ansprüche 1 bis 8, **dadurch gekennzeichnet, dass** während des Quellungsschrittes neben dem oder den Kristallisationsmodifikatoren ein die Löslichkeit des Pigments erhöhender Zusatzes vorliegt.

10. Verfahren nach Anspruch 9, **dadurch gekennzeichnet, dass** der die Löslichkeit erhöhende Zusatz ein organisches Lösungsmittel ist.

11. Verfahren nach einem der Ansprüche 1 bis 10, **dadurch gekennzeichnet, dass** das organische Pigment ausgewählt ist aus der Gruppe bestehend aus Phthalocyaninen, Perylenen, Chinacridonen, Indanthronen, Chinophthalonen, Dioxazinen und Diketopyrrolen.

## Claims

1. A method of finishing an organic pigment by dry-comminuting said pigment in the presence of a sulfonato-functional condensation product of an arylsulfonic acid and at least one aliphatic aldehyde having 1 to 6 C atoms as crystallization modifier, dispersing the resulting mixture of pigment and crystallization modifier in mineral acid, and swelling the pigment in the presence of the crystallization modifier in mineral acid.

2. The method according to claim 1, wherein the crystallisation modifier is a condensation product of naphthalenesulfonic acid and formaldehyde.

3. The method according to claim 1, wherein the crystallization modifier is a condensation product of at least one hydroxyarylsulfonic acid and/or at least one hydroxydiaryl sulfone compound and at least one aliphatic aldehyde having 1 - 6 C atoms, optionally urea, and, if appropriate, an alkali metal sulfite, or a mixture of such condensation products.

4. The method according to any one of claims 1 to 3, wherein the swelling of the pigment is carried out in the presence of further crystallization modifiers, dispersants, surfactants or specific polymers.

5. The method according to any one of claims 1 to 4, wherein a pigment synergist is added.

6. The method according to claim 5, wherein the Pigment synergist is added before or during the comminution step or before or during the swelling of the pigment.

7. The method according to claim 5, wherein the isolated, dry, finished pigment is ground in the presence of the pigment synergist in an aftertreatment step.

8. The method according to any one of claims 5 to 7, wherein the pigment synergist is a derivative comprising sulfonate groups or carbonate groups, or a basic derivative, of the organic pigment to be finished.

9. The method according to any one of claims 1 to 8, wherein an additive which enhances the solubility of the pigment is present alongside the crystallisation modifier or modifiers during the swelling step.

10. The method according to claim 9, wherein the solubility enhancer additive is an organic solvent.

11. The method according to any one of claims 1 to 10, wherein the organic pigment is selected from the group consisting of phthalocyanines, perylenes, quinacridones, indanthrones, quinophthalones, dioxazines, and diketopyrroles.

## Revendications

1. Procédé pour la mise en forme d'un pigment organique, dans lequel on fragmente à sec le pigment en présence d'un produit de condensation, comportant des groupes sulfonate, à base d'un acide arylsulfonique et d'au moins un aldéhyde aliphatique ayant de 1 à 6 atomes de carbone, en tant que modificateur de cristallisation, on disperse dans un acide minéral le mélange obtenu de pigment et modificateur de cristallisation et on laisse gonfler dans l'acide minéral le pigment en présence du modificateur de cristallisation.

2. Procédé selon la revendication 1, **caractérisé en ce que** le modificateur de cristallisation est un produit de condensation d'acide naphtalènesulfonique et formaldéhyde.

3. Procédé selon la revendication 1, **caractérisé en ce que** le modificateur de cristallisation est in produit de condensation d'au moins un acide hydroxyarylsulfonique et/ou d'au moines un composé hydroxydiarylsulfone et d'au moins un aldéhyde aliphatique ayant de 1 à 6 atomes de carbone, d'urée en option et éventuellement d'un sulfite alcalin, ou un mélange de tels produits de condensation.

4. Procédé selon l'une quelconque des revendications 1 à 3, **caractérisé en ce que** le gonflement du pigment est effectué en présence d'autres modificateurs de cristallisation, de dispersants, de tensioactifs ou de polymères spécieux.

5. Procédé selon l'une quelconque des revendications 1 à 4, **caractérisé en ce qu'**on ajoute un argent synergique de pigment.

6. Procédé selon la revendication 5, **caractérisé en ce que** l'agent synergique de pigmentation est ajouté avant ou pendant le gonflement du pigment.

7. Procédé selon la revendication 5, **caractérisé en ce que** dans une étape de post-traitement le pigment mis en forme, sec, isolé, est broyé en présence de l'agent synergique de pigment.

8. Procédé selon ligne quelconque des revendications 5 à 7, **caractérisé en ce que** l'agent synergique de pigment est un dérivé contenant des groupes sulfo ou des groupes carbonate ou un dérivé basique du pigment organique à mettre en forme.

9. Procédé selon l'une quelconque des revendications 1 à 8, **caractérisé en ce que** pendant l'étape de gonflement outre le modificateur de cristallisation est présent un auditif augmentant la solubilité du pigment.

10. Procédé selon la revendication 9, **caractérisé en ce que** l'additif augmentant la solubilité est un solvant organique.

11. Procédé selon l'une quelconque des revendications 1 à 10, **caractérisé en ce que** le solvant organique est choisi dans le groupe constitué par les phtalocyanines, les pérylènes, les quinacridones, les indanthrones, les quinophtalones, les dioxazines et les dicétopyrroles.
